# EUROPÄISCHE PATENTSCHRIFT

(11) **EP 1 906 110 B1**
(45) Veröffentlichungstag und Bekanntmachung des Hinweises auf die Patenterteilung: **05.06.2013**
(21) Anmeldenummer: 07018339.7
(22) Anmeldetag: 19.09.2007
(51) Int. Cl.: F24H 1/18, F28D 20/00

(54) **Mehrteilige Wärmedämmung für einen Speicher**
Multipart heat insulation for a storage tank
Isolation thermique en plusieurs parties pour un réservoir de stockage

(30) Priorität: 25.09.2006 AT 15952006
(43) Veröffentlichungstag der Anmeldung: 02.04.2008
(73) Patentinhaber: Vaillant GmbH, 42859 Remscheid (DE)
(72) Erfinder: Dorenburg, Michael, 40699 Erkrath (DE)
(74) Vertreter: Hocker, Thomas

(56) Entgegenhaltungen:
- EP-A1- 1 389 718
- DE-A1- 19 510 490
- DE-U1- 29 518 110
- DE-U1- 29 600 455

## Beschreibung

Die Erfindung bezieht sich auf eine mehrteilige Wärmedämmung für einen Speicher.

Bei großen Warmwasserspeichern besteht das Problem, dass sie sehr sperrig sind und somit beim Transport und der Montage Probleme durch die Ausmaße entstehen können. Daher ist es bei großen Warmwasserspeichern üblich, dass die Wärmedämmung erst vor Ort angebracht wird. In der Regel wird dann die Wärmedämmung von unten nach oben angebracht, wobei die untersten Teile auf dem Boden aufstehen. Dies hat den Nachteil, dass der Behälter nach der Montage in der Regel nicht mehr bewegt werden kann, da hierdurch ansonsten die Verkleidung beschädigt würde. So ist es nicht möglich, den Behälter vertikal auszurichten oder um einige Zentimeter zu verschieben, ohne dabei die gesamte Verkleidung zu entfernen.

DE 195 10 490 A1 zeigt eine derartige mehrteilige Wärmedämmung für einen Speicher, bei der der Deckel über eine Nut auf der Unterseite verfügt. Die verfügen Seitenteile über Federn auf der Oberseite. Zur Montage der Wärmedämmung kann der Deckel lediglich von oben mit den Seitenteilen verbunden werden.

Der Erfindung liegt die Aufgabe zugrunde, eine Wärmedämmung für Speicher bereitzustellen, welche einfach montierbar ist und hierbei keinen statischen Kräften durch den Speicherbehälter ausgesetzt ist.

Erfindungsgemäß wird dies gemäß den Merkmalen des unabhängigen Vorrichtungsanspruchs sowie des unabhängigen Verfahrensanspruchs dadurch gelöst, dass ein Speicher über mehrere Wärmedämmungsteile verfügt. Ein Deckel verfügt über eine umlaufende Nut und Feder an der unteren Kante der zylindrischen Außenseite ; sich vertikal erstreckende Seitenteile verfügen über Nuten und Federn an der oberen Kante der Innenseite der Seitenteile. Hierdurch können die Teile ineinander eingreifen und einen Wärmedämmungsmantel schaffen. Die Wärmedämmung ist hierbei nur ihrem Eigengewicht als Belastung ausgesetzt. Dieses wird über den Deckel auf den Speicherbehälter übertragen.

Vorteilhafte Ausgestaltungen ergeben sich gemäß den Merkmalen der Unteransprüche. So können beliebig viele sich vertikal erstreckende Seitenteile untereinander über Nuten und Federn, welche ineinander eingreifen, verbunden werden. Die untersten Seitenteile verfügen über einen zum Deckel im Wesentlichen parallelen Boden, so dass die Wärmedämmung auch nach unten hin gegenüber der Umgebung abgedichtet ist. Verfügen die Seitenteile über korrespondierende Nuten und Federn, so können sie auf horizontale Ebene vertikal ineinander eingreifen und somit um den Umfang des Speicherbehälters eine formschlüssige Verbindung schaffen. Die sich gegenüberliegenden Seitenteile können über Schnallen mit korrespondierenden Verschlussgegenstücken miteinander verbunden werden, so dass die Verbindung nicht alleine auf die Feder-/Nutverbindung angewiesen ist.

Verfügen die Seitenteile über Öffnungen, so können dadurch Anschlüsse für elektrische und hydraulische Leitungen als auch Wartungsöffnungen angeordnet werden. Die Wärmedämmung kann mit einer Deckelverkleidung und einer Frontverkleidung abgeschlossen werden.

Die Erfindung wird nun anhand der Figuren näher erläutert. Hierbei zeigen
Figur 1 einen Speicher mit Deckel vor der Montage,
Figur 2 derselbe Speicher mit dem Deckel nach der Montage,
Figur 3 der Speicher mit Deckel und dem ersten Seitenteil,
Figur 4 ein Seitenteil mit Boden isoliert,
Figur 5 der Speicher mit Deckel und drei Seitenteilen,
Figur 6 der Speicher mit der kompletten Wärmedämmung in perspektivischer Ansicht sowie
Figur 7 als Explosionszeichnung und
Figur 8 die Wärmedämmung mit optischer Verkleidung.

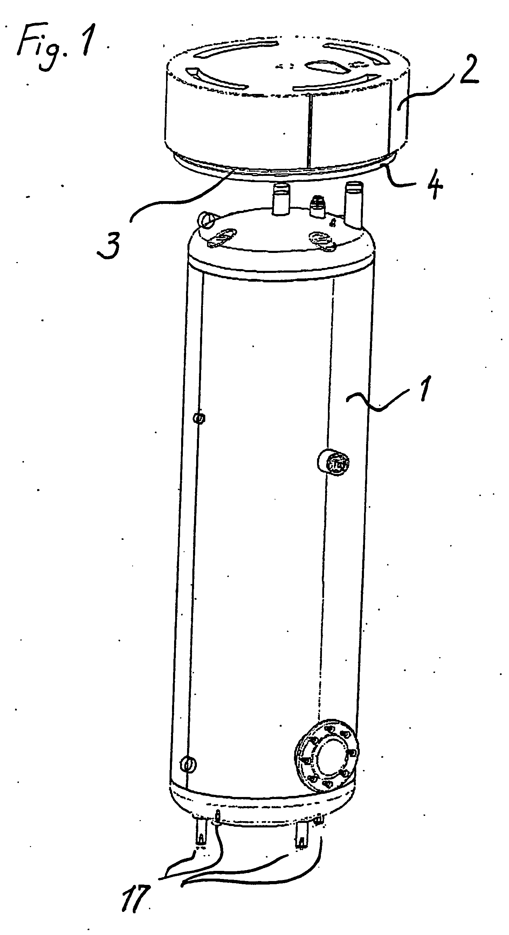

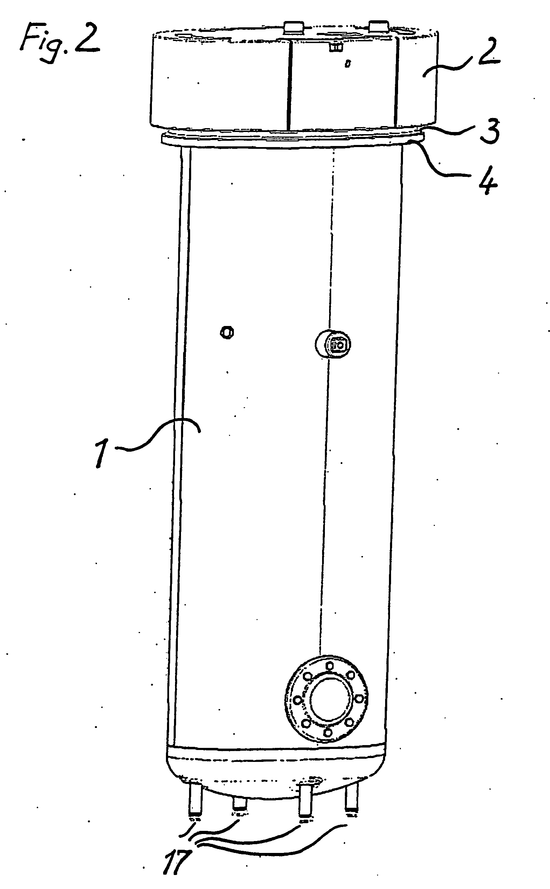

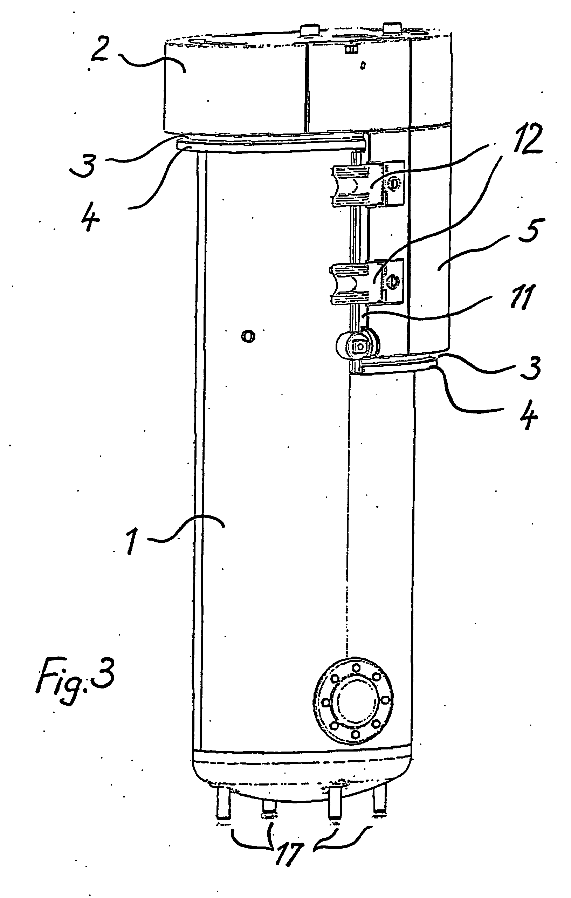

Figur 1 zeigt einen Speicher 1 mit einem Deckel 2 der Wärmedämmung. Der Deckel 2 verfügt über eine umlaufende Nut 3 und eine umlaufende Feder 4. Während gemäß Figur 1 der Deckel 2 noch nicht mit dem Speicher 1 verbunden ist, zeigt Figur 2 den Deckel 2, welcher auf dem Speicher 1 fest angebracht ist. Figur 3 zeigt den Speicherbehälter 1 mit Deckel 2 und seitlichem Verkleidungsteil 5. Das Seitenteil 5 verfügt über eine Nut 6 und eine Feder 7 an der Oberseite, welche in die Nut 3 und Feder 4 des Deckels 2 eingreifen. Das Seitenteil 5 wiederum verfügt an der Unterseite über eine Nut 3 und eine Feder 4. An der vertikalen Seite verfügt das Seitenteil 5 über eine Nut 11 sowie zwei Schnallen 12.

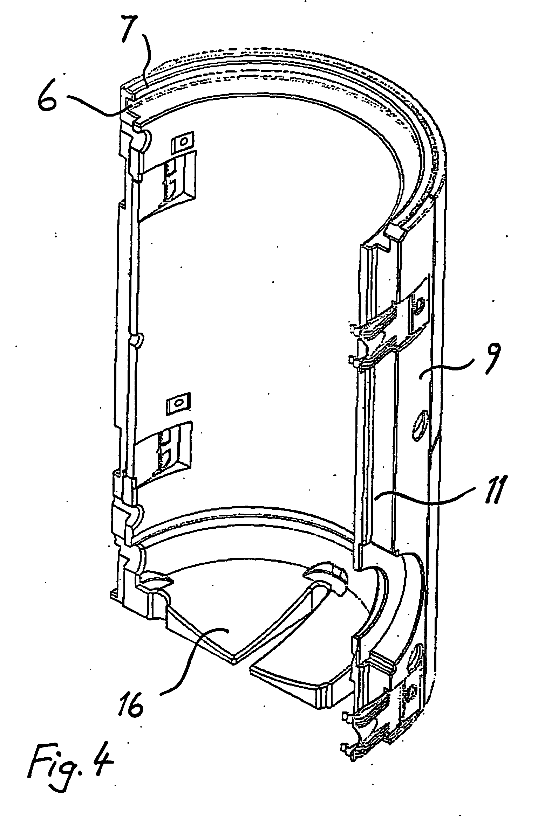

Figur 4 zeigt ein Seitenteil 9, welches über einen Boden 16 verfügt.

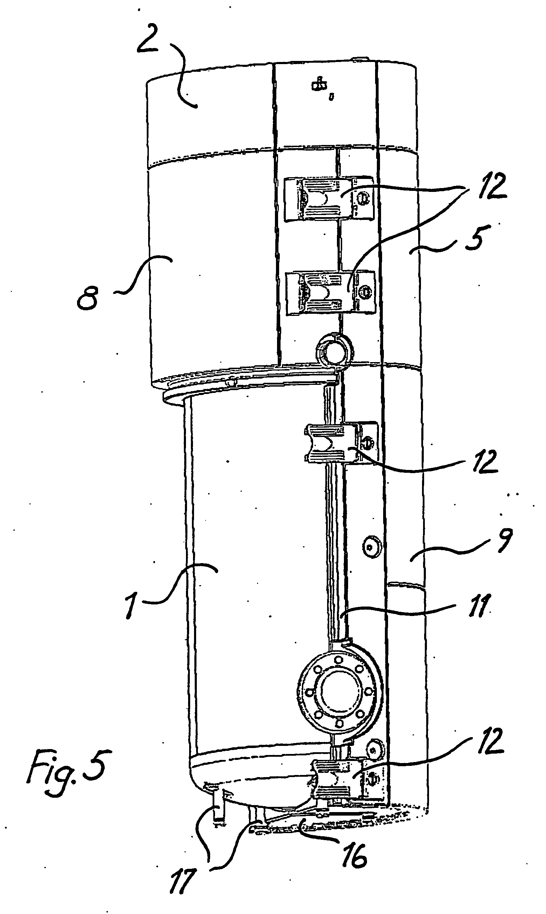

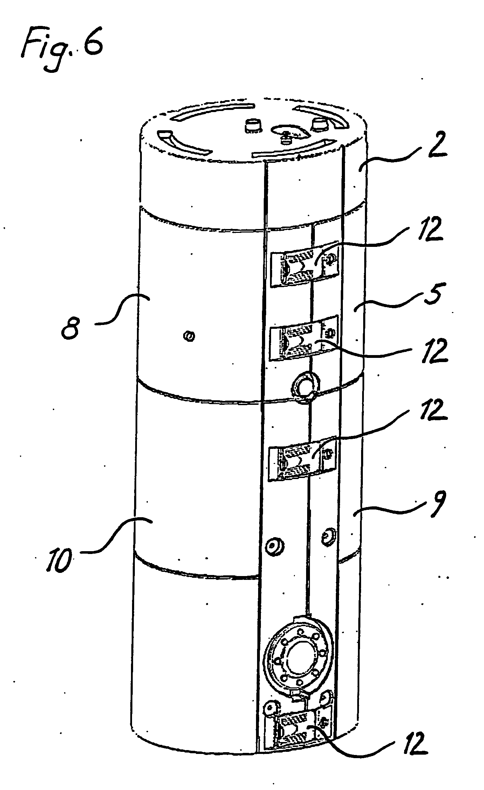

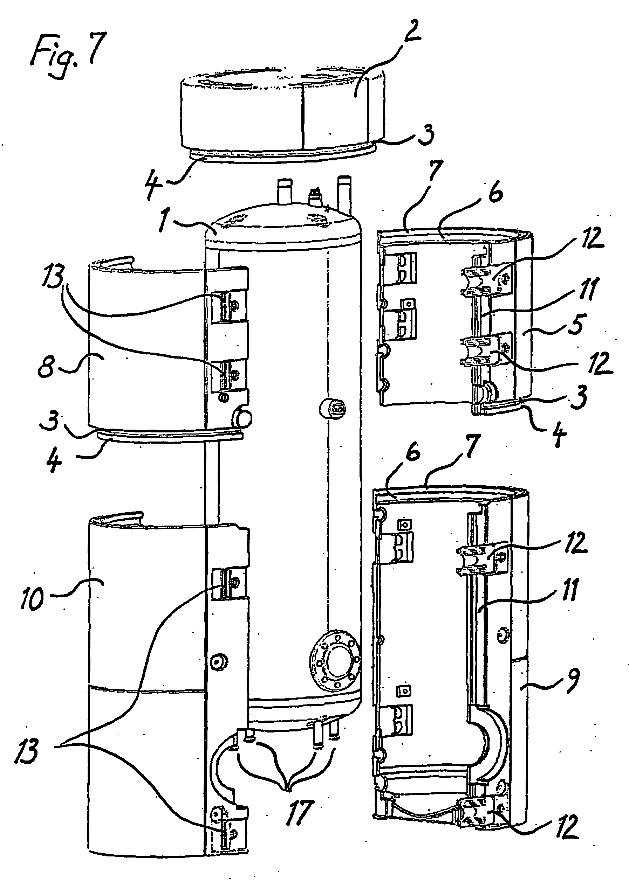

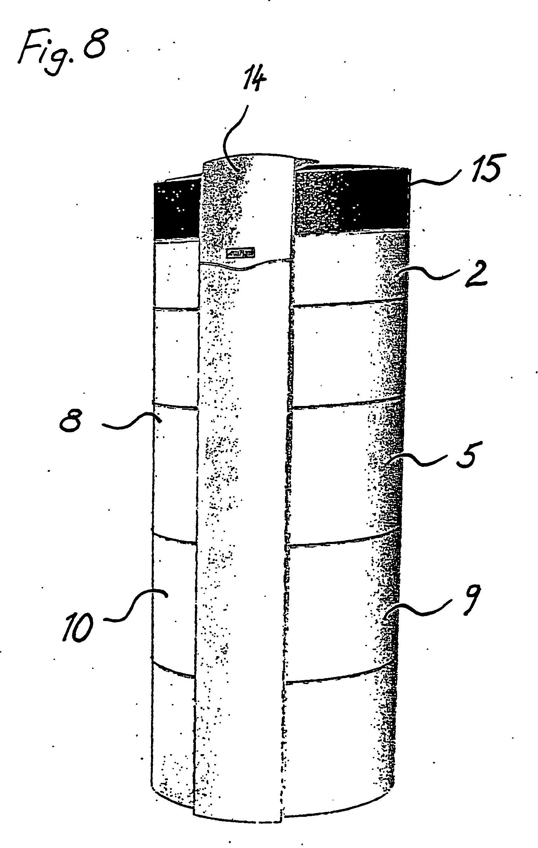

Figur 5 zeigt den Speicher 1 mit Deckel 2 sowie den drei Seitenteilen 5, 8 und 9. Die Seitenteile 5, 8 greifen ineinander über Nuten 11 ein und sind durch Schnallen 12 gesichert. Das untere Seitenteil 9 umschließt den Speicher 1 an seiner Unterseite mit dem Boden 16. Hierbei ragen Füße 17 durch den Boden 16. Die Figuren 6 und 7 zeigen die komplette Wärmedämmung um den Speicher 1 mit dem Deckel 2 als auch den vier Seitenteilen 5, 8, 9, 10. In Figur 8 ist zu sehen, dass sich auf der Decke 2 eine Deckelverkleidung 15 sowie vor den Seitenteilen 5, 8, 9, 10 eine Frontverkleidung 14 befinden.

Zur Montage der Verkleidung wird zunächst der Deckel 2 auf den Speicher 1 aufgesetzt. Anschließend wird das Seitenteil 5 über die obere Nut 6 und Feder 7 mit der Nut 3 und der Feder 4 des Deckels 2 verbunden. Anschließend wird das Seitenteil 8 in gleicher Weise mit dem Deckel 2 verbunden, wobei zusätzlich die vertikale Nut 11 des Seitenteils 5 in die eine korrespondierende Feder des Teils 8 eingreift. Eine gleichartige Verbindung über Nut und Feder befindet sich auch auf der Rückseite der Seitenteile 5, 8. In gleicher Art werden die Seitenteile 9 und 10 mit den darüber befindlichen Seitenteilen 5, 8 verbunden. Hierbei schließen die Seitenteile 9, 10 die Wärmedämmung nach unten mit dem Boden 16 ab, wobei die Füße 17 des Speicherbehälters 1 nach wie vor durch den Boden 16 hindurchschauen. Auf diese Art kann erreicht werden, dass später der Speicherbehälter noch ausgerichtet werden kann. Sind die Seitenteile 5, 8, 9, 10 angebracht, so werden die Schnallen 12 mit den Verschlussgegenstücken 13 verbunden.

Abschließend wird die Deckelverkleidung 15 auf den Deckel 2 gesetzt und eine Frontverkleidung 14 vor die Seitenteile 5, 8, 9, 10 gesetzt, wobei die Frontverkleidung 14 in eine entsprechende Halterung zur Aufnahme der Frontverkleidung 14 im Deckel 2 eingreift.

Vorteil der oben genannten Wärmeverkleidung und des Montageverfahrens sind, dass keine Werkzeuge benötigt werden. Die Verkleidung kann auch schnell wieder abgenommen werden, ohne dass hierbei die Gefahr der Verletzung von Verkleidungsteilen besteht.

## Patentansprüche

1. Mehrteilige Wärmedämmung für einen Speicher (1), vorzugsweise Warmwasserspeicher, **dadurch gekennzeichnet, dass** die Wärmedämmung über einen Deckel (2) mit umlaufender Nut (3) und Feder (4) an der unteren Kante der zylindrischen Außenseite des Deckels (2) und mindestens zwei sich vertikal erstreckende Seitenteile (5, 8) mit Nuten (6) und Federn (7) an der oberen Kante der Innenseite der Seitenteile (5, 8) verfügt und die Nuten (6) und Federn (7) an der Oberseite der Seitenteile (5, 8) in die umlaufende Nut (3) und Feder (4) an der Unterseite des Deckels (2) eingreifen.

2. Mehrteilige Wärmedämmung nach Anspruch 1, **dadurch gekennzeichnet, dass** die mindestens zwei sich vertikal erstreckende Seitenteile (5, 8) über weitere Nuten (3) und Federn (4) an der Unterseite verfügen und mindestens zwei weitere sich vertikal erstreckende Seitenteile (9, 10), welche über Nuten (6) und Federn (7) an der Oberseite der Seitenteile (9, 10) verfügt, mit diesen Nuten (6) und Federn (7) an der Oberseite der Seitenteile (9, 10) in die umlaufende Nut (3) und Feder (4) an der Unterseite der darüber angeordneten Seitenteile (5, 8) eingreifen.

3. Mehrteilige Wärmedämmung nach Anspruch 2, **dadurch gekennzeichnet, dass** weitere sich vertikal erstreckende Seitenteile auf die gleiche Weise nach unten anschließen.

4. Mehrteilige Wärmedämmung nach einem der Ansprüche 1 bis 3, **dadurch gekennzeichnet, dass** die untersten Seitenteile (9, 10) über einen zum Deckel (2) parallelen Boden (16) verfügen.

5. Mehrteilige Wärmedämmung nach einem der Ansprüche 1 bis 4, **dadurch gekennzeichnet, dass** die sich vertikal erstreckende Seitenteile (5, 8, 9, 10) über Nuten (11) und Federn verfügen, welche zumindest annähernd vertikal in Federn und Nuten (11) anderer sich vertikal erstreckende Seitenteile (5, 8, 9, 10) eingreifen.

6. Mehrteilige Wärmedämmung nach einem der Ansprüche 1 bis 5, **dadurch gekennzeichnet, dass** Seitenteile (5, 9) über Schnallen (12) in Verschlussgegenstücke (13) von horizontal daneben positionierten Seitenteile (8, 10) eingreifen.

7. Mehrteilige Wärmedämmung nach einem der Ansprüche 1 bis 6, **dadurch gekennzeichnet, dass** in den Seitenteile (5, 8, 9, 10) Öffnungen für Anschlüsse vorhanden sind.

8. Mehrteilige Wärmedämmung nach einem der Ansprüche 1 bis 7, **dadurch gekennzeichnet, dass** eine Deckelverkleidung (15) auf den Deckel (2) und / oder eine Frontverkleidung (14) über der vertikalen Naht der Seitenteile (5, 8, 9, 10) angeordnet sind.

9. Verfahren zur Montage einer mehrteiligen Wärmedämmung für einen Speicher (1), vorzugsweise Warmwasserspeicher, wobei die Wärmedämmung über einen Deckel (2) mit umlaufender Nut (3) und Feder (4) an der Unterseite des Deckels (2) und mindestens zwei sich vertikal erstreckende Seitenteile (5, 8, 9, 10) mit Nuten (6) und Feder (7) an der Oberseite der Seitenteile (5, 8, 9, 10) verfügt und die Nuten (6) und Federn (7) an der Oberseite der Seitenteile (5, 8, 9, 10) in die umlaufende Nut (3) und Feder (4) an der Unterseite des Deckels (2) eingreifen, **dadurch gekennzeichnet, dass** zunächst der Deckel (2) auf den Speicher (1) aufgesetzt wird und dann von oben nach unten die Seitenteile (5, 8, 9, 10) seitlich zugeführt werden, wobei die zugeführten Seitenteile (5, 8, 9, 10) mit jeweils deren Nuten (6) und Federn (7) an der Oberseite in die Nuten (3) und Federn (4) der darüber befindlichen Teile (2, 5, 8) eingreifen.

10. Verfahren zur Montage einer mehrteiligen Wärmedämmung nach Anspruch 9, **dadurch gekennzeichnet, dass** die Schnallen (12) der Seitenteile (5, 9) mit den Verschlussgegenstücken (13) von horizontal daneben positionierten Seitenteile (8, 10) verbunden werden.

11. Verfahren zur Montage einer mehrteiligen Wärmedämmung nach einem der Ansprüche 9 oder 10, **dadurch gekennzeichnet, dass** eine Deckelverkleidung (15) auf den Deckel (2) und / oder eine Frontverkleidung (14) über der vertikalen Naht der Seitenteile (5, 8, 9, 10) angeordnet werden.

## Claims

1. Multi-part heat insulation for a storage tank (1), preferably a hot water storage tank, **characterised in that** the heat insulation possesses a cover (2) with a circumferential notch (3) and spring (4) on the lower edge of the cylindrical exterior of the cover (2) and at least two vertically extending side sections (5, 8) with notches (6) and springs (7) on the upper edge of the interior of the side sections (5, 8), and the notches (6) and springs (7) on the upper side of the side sections (5, 8) engage with the circumferential notch (3) and spring (4) on the lower side of the cover (2).

2. Multi-part heat insulation according to claim 1, **characterised in that** the at least two vertically extending side sections (5, 8) possess further notches (3) and springs (4) on the lower side and at least two further vertically extending side sections (9, 10), which possess notches (6) and springs (7) on the upper side of the side sections (9, 10), with these notches (6) and springs (7) on the upper side of the side sections (9, 10), engage with the circumferential notch (3) and spring (4) on the lower side of the side sections (5, 8) arranged thereabove.

3. Multi-part heat insulation according to claim 2, **characterised in that** further vertically extending side sections connect downwards in the same manner.

4. Multi-part heat insulation according to one of claims 1 to 3, **characterised in that** the lowermost side sections (9, 10) possess a floor (16) that is parallel to the cover (2).

5. Multi-part heat insulation according to one of claims 1 to 4, **characterised in that** the vertically extending side sections (5, 8, 9, 10) possess notches (11) and springs that engage at least virtually vertically with springs and notches (11) of other vertically extending side sections (5, 8, 9, 10).

6. Multi-part heat insulation according to one of claims 1 to 5, **characterised in that,** via straps (12), side sections (5, 9) engage with cap counterparts (13) of side sections (8, 10) that are positioned horizontally alongside them.

7. Multi-part heat insulation according to one of claims 1 to 6, **characterised in that** openings for connections are present in the side sections (5, 8, 9, 10).

8. Multi-part heat insulation according to one of claims 1 to 7, **characterised in that** a cover lining (15) is arranged on the cover (2) and/or a front lining (14) is arranged above the vertical joint of the side sections (5, 8, 9, 10).

9. Method for assembling multi-part heat insulation for a storage tank (1), preferable a hot water storage tank, wherein the heat insulation possesses a cover (2) with a circumferential notch (3) and spring (4) on the lower edge of the cover (2) and at least two vertically extending side sections (5, 8, 9, 10) with notches (6) and springs (7) on the upper edge of the side sections (5, 8, 9, 10), and the notches (6) and springs (7) on the upper side of the side sections (5, 8, 9, 10) engage with the circumferential notch (3) and spring (4) on the lower side of the cover (2), **characterised in that** first the cover (2) is attached to the storage tank (1) and then the side sections (5, 8, 9, 10) are added laterally from top to bottom, wherein the added side sections (5, 8, 9, 10), with their respective notches (6) and springs (7) on the upper side, engage with the notches (3) and springs (4) of the sections (2, 5, 8) located thereabove.

10. Method for assembling multi-part heat insulation according to claim 9, **characterised in that** the straps (12) of the side sections (5, 9) are connected to the cap counterparts (13) of side sections (8, 10) that are positioned horizontally alongside them.

11. Method for assembling multi-part heat insulation according to one of claims 9 or 10, **characterised in that** a cover lining (15) is arranged on the cover (2) and/or a front lining (14) is arranged above the vertical joint of the side sections (5, 8, 9, 10).

## Revendications

1. Isolant thermique à plusieurs parties conçu pour un réservoir (1), de préférence un réservoir d'eau chaude, **caractérisé en ce que** l'isolant thermique dispose d'un couvercle (2) doté d'une encoche rotative (3) et d'un ressort (4) situés au niveau de l'arête inférieure de la face externe cylindrique du couvercle (2) et au moins de deux parties latérales verticales (5, 8) dotées d'encoches (6) et de ressorts (7) situés au niveau de l'arête supérieure de la face interne des parties latérales (5, 8) et **en ce que** les encoches (6) et les ressorts (7) s'engrènent au niveau de la partie supérieure des parties latérales (5, 8) dans l'encoche rotative (3) et le ressort (4) situés au niveau de la partie inférieure du couvercle (2).

2. Isolant thermique à plusieurs parties selon la revendication 1, **caractérisé en ce que** les deux parties latérales verticales (5, 8) disposent d'encoches (3) et de ressorts (4) supplémentaires situés au niveau de la partie inférieure et au moins de deux autres parties latérales verticales (9, 10), lesquelles disposent d'encoches (6) et de ressorts (7) situés au niveau de la partie supérieure des parties latérales (9, 10), ces encoches (6) et ces ressorts (7) s'engrenant au niveau de la partie supérieure des parties latérales (9, 10) dans l'encoche rotative (3) et le ressort (4) situés au niveau de la partie inférieure des parties latérales (5, 8) disposées dessus.

3. Isolant thermique à plusieurs parties selon la revendication 2, **caractérisé en ce que** d'autres parties latérales verticales se rejoignent vers le bas de la même manière.

4. Isolant thermique à plusieurs parties selon l'une quelconque des revendications 1 à 3, **caractérisé en ce que** les parties latérales les plus basses (9, 10) disposent d'un fond (16) parallèle au couvercle (2).

5. Isolant thermique à plusieurs parties selon l'une quelconque des revendications 1 à 4, **caractérisé en ce que** les parties latérales verticales (5, 8, 9, 10) disposent d'encoches (11) et de ressorts, lesquels s'engrènent au moins approximativement verticalement dans les ressorts et les encoches (11) des autres parties latérales verticales (5, 8, 9, 10).

6. Isolant thermique à plusieurs parties selon l'une quelconque des revendications 1 à 5, **caractérisé en ce que** les parties latérales (5, 9) s'engrènent au moyen de boucles (12) dans des pendants de fermeture (13) des parties latérales (8, 10) positionnées également horizontalement.

7. Isolant thermique à plusieurs parties selon l'une quelconque des revendications 1 à 6, **caractérisé en ce que** des ouvertures permettant les raccords sont prévues dans les parties latérales (5, 8, 9, 10).

8. Isolant thermique à plusieurs parties selon l'une quelconque des revendications 1 à 7, **caractérisé en ce qu'**un revêtement (15) est disposé sur le couvercle (2) et / ou un revêtement frontal (14) est disposé sur le joint vertical des parties latérales (5, 8, 9, 10).

9. Procédé de montage d'un isolant thermique à plusieurs parties conçu pour un réservoir (1), de préférence un réservoir d'eau chaude, l'isolant thermique disposant d'un couvercle (2) doté d'une encoche rotative (3) et d'un ressort (4) situés au niveau de la partie inférieure du couvercle (2) et au moins de deux parties latérales verticales (5, 8, 9, 10) dotées d'encoches (6) et de ressorts (7) situés au niveau de la partie supérieure des parties latérales (5, 8, 9, 10) et les encoches (6) et les ressorts (7) situés au niveau de la partie supérieure des parties latérales (5, 8, 9, 10) s'engrenant dans l'encoche rotative (3) et le ressort (4) situés au niveau de la partie inférieure du couvercle (2), **caractérisé en ce que** le couvercle (2) est d'abord posé sur le réservoir (1) puis les parties latérales (5, 8, 9, 10) sont introduites latéralement du haut vers le bas, les parties latérales introduites (5, 8, 9, 10) avec leurs encoches (6) et leurs ressorts (7) s'engrenant au niveau de la partie supérieure dans les encoches (3) et les ressorts (4) des parties situées au-dessus (2, 5, 8).

10. Procédé de montage d'un isolant thermique à plusieurs parties selon la revendication 9, **caractérisé en ce que** les boucles (12) des parties latérales (5, 9) sont reliées aux pendants de fermeture (13) des parties latérales positionnées également horizontalement (8, 10).

11. Procédé de montage d'un isolant thermique à plusieurs parties selon l'une quelconque des revendications 9 ou 10, **caractérisé en ce qu'**un revêtement (15) est disposé sur le couvercle (2) et / ou un revêtement frontal (14) est disposé sur le joint vertical des parties latérales (5, 8, 9, 10).
